# FASCICULE DE BREVET EUROPEEN

(11) **EP 4 105 053 B1**
(45) Date de publication et mention de la délivrance du brevet: **31.07.2024**
(21) Numéro de dépôt: 22179292.2
(22) Date de dépôt: 15.06.2022
(51) Int. Cl.: B60K 37/10, B60K 35/00, B62D 25/14, B60R 13/02, B60K 37/00

(54) **VÉHICULE COMPRENANT UNE PLANCHE DE BORD BORDÉE PAR DEUX PAROIS LATÉRALES À RATTRAPAGE DE DISPERSION**
FAHRZEUG MIT EINEM ARMATURENBRETT, DAS VON ZWEI SEITENWÄNDEN MIT TOLERANZAUSGLEICH BEGRENZT WIRD
VEHICLE COMPRISING AN INSTRUMENT PANEL BORDERED BY TWO TOLERANCE-COMPENSATING SIDE WALLS

(30) Priorité: 16.06.2021 FR 2106373
(43) Date de publication de la demande: 21.12.2022
(73) Titulaire: Renault s.a.s, 92100 Boulogne Billancourt (FR)
(72) Inventeur: BERNARD, Denis, 78288 GUYANCOURT (FR)

(56) Documents cités:
- EP-B1- 0 872 408
- DE-C2- 4 337 467
- US-A1- 2006 186 650

## Description

La présente invention concerne un véhicule comprenant une planche de bord bordée par deux parois latérales à rattrapage de dispersion.

L'état de la technique pertinent est connu par les documents US 2006/186650 A1, EP 0 872 408 B1 et DE 43 37 467 C2.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut. Schématiquement, une planche de bord est une pièce allongée s'étendant le long d'un axe transversal Y du véhicule. Les deux parois latérales sont situées aux deux extrémités de cette planche de bord, considérées le long d'un axe longitudinal de ladite planche de bord, chacune desdites parois latérales s'étendant dans un plan sensiblement vertical et longitudinal XZ dudit véhicule. Ces parois latérales agissent comme des parois d'obturation ayant pour fonction essentielle de cacher des pièces mécaniques situées entre le côté de caisse et la planche de bord. Or, les référentiels de fixation entre le côté de caisse et la planche de bord étant différents, des jeux disgracieux peuvent être créés entre la paroi latérale et la planche de bord, et/ou le côté de caisse. Ces jeux détériorent le rendu visuel du véhicule, et donnent l'impression que le véhicule a été mal fini, refroidissant les velléités d'un client potentiel à vouloir acquérir un tel véhicule. Un véhicule selon l'invention possède une planche de bord et deux parois latérales d'obturation montées aux extrémités de ladite planche de bord en s'affranchissant des inconvénients rencontrés dans l'état de la technique. L'invention a pour objet un véhicule comprenant deux côtés de caisse, une planche de bord s'étendant suivant un axe transversal Y du véhicule et deux parois latérales d'obturation placées aux deux extrémités de ladite planche de bord, considérées suivant un axe longitudinal de celle-ci.

Selon l'invention, chacune des deux parois latérales d'obturation comprend un premier segment fixé à la planche de bord et un deuxième segment fixé de façon mobile sur un côté de caisse, le deuxième segment étant monté coulissant sur le premier segment de façon à ajuster le calage dudit deuxième segment avec un montant de baie sur le côté de caisse. Le principe d'un véhicule selon l'invention est de posséder deux parois latérales d'obturation, placées aux deux extrémités de la planche de bord et composées chacune de deux segments distincts, dont un premier segment est fixe et dont un deuxième segment est monté coulissant sur ledit premier segment. L'intérêt d'un tel arrangement est que la position du deuxième segment est ajustable pour empêcher l'apparition de jeux disgracieux entre ledit deuxième segment et un montant de baie. Autrement dit, un tel arrangement permet d'absorber des dispersions de montage de certaines pièces dans le véhicule, au moyen d'un simple réajustement positionnel du deuxième segment, ledit réajustement s'effectuant préférentiellement avec la main. Les deux parois latérales d'obturation permettent de masquer un espace interne de la planche de bord dans lequel sont logés un certain nombre de pièces et de câbles qui ont tendance à détériorer l'esthétique du véhicule. Il est à noter que l'amplitude de déplacement par coulissement du deuxième segment sur le premier segment est assez limitée, et ne doit pas dépasser quelques centimètres, et avantageusement ne doit pas dépasser 5cm. De façon avantageuse, les deux segments sont réalisés en matière plastique.

Selon une caractéristique possible de l'invention, le deuxième segment est monté coulissant sur le premier segment le long d'un axe vertical Z. Comme le premier segment et le deuxième segment sont allongés et s'étendent suivant un axe sensiblement vertical, il est plus naturel de réajuster la position du deuxième segment sur le premier segment suivant un axe vertical.

Selon une caractéristique possible de l'invention, l'un des deux éléments constitués par le premier segment et le deuxième segment comprend au moins un trou oblong dont le grand axe s'étend suivant un axe vertical, l'autre élément comprenant au moins un pion fixe passant dans ledit trou oblong. Le coulissement d'un segment sur l'autre segment s'effectue par le biais d'un système de pion/ trou oblong, l'orientation du grand axe du trou oblong préfigurant la direction du coulissement du deuxième segment sur le premier segment. L'expression « trou oblong » est utilisée préférentiellement aux termes « rainure » ou « fente », pour signifier que l'amplitude de coulissement est limitée, car dans un trou oblong la longueur du grand axe, est légèrement supérieure à celle du petit axe.

Selon une caractéristique possible de l'invention, le deuxième segment comprend ledit au moins un trou oblong et le premier segment comprend ledit au moins un pion, le pion prenant naissance sur le premier segment et se termine par une tête élargie, ledit pion passant dans le trou oblong de sorte que la tête élargie empêche le deuxième segment de s'écarter du premier segment. Le pion avec une tête élargi agit comme un élément de retenue en empêchant tout mouvement relatif entre le premier segment et le deuxième segment. Pour cette configuration, il est supposé que ledit au moins un pion est solidaire d'une paroi du premier segment s'étendant dans un plan vertical et longitudinal XZ du véhicule. De même, ledit au moins un trou oblong est pratiqué dans une paroi du deuxième segment s'étendant dans un plan vertical et longitudinal XZ du véhicule. Dans ces cas, la tête élargie du pion empêche tout mouvement relatif du deuxième segment par rapport au premier segment suivant un axe transversal Y du véhicule.

Selon une caractéristique possible de l'invention, le deuxième segment comprend trois trous oblongs dont les grands axes s'étendent suivant un axe vertical et le premier segment comprend trois pions passant chacun dans un trou oblong, et en ce que les trois trous oblongs sont séparés et alignés le long d'un axe vertical. La présence de trois trous oblongs et de trois pions permet de mieux répartir les efforts sur les deux segments lors du coulissement du deuxième segment sur le premier segment. Pour cette configuration, il est supposé que les trois pions sont solidaires d'une paroi du premier segment s'étendant dans un plan vertical et longitudinal XZ du véhicule. De même, les trois trous oblongs sont pratiqués dans une paroi du deuxième segment s'étendant dans un plan vertical et longitudinal XZ du véhicule. Dans ce cas, les têtes élargies des pions empêchent tout mouvement relatif du deuxième segment par rapport au premier segment suivant un axe transversal Y du véhicule.

Selon une caractéristique possible de l'invention, l'amplitude maximale de déplacement du deuxième segment sur le premier segment est inférieure à 5cm. En effet, le coulissement du deuxième segment le long du premier segment sert seulement à réajuster la position du deuxième segment avec une faible amplitude pour assurer un bon calage entre ledit deuxième segment et un montant de baie. Un tel coulissement n'a pas pour but de changer fondamentalement la position du deuxième segment par rapport à celle du premier segment.

Selon une caractéristique possible de l'invention, le premier segment comprend une butée inférieure et en ce que le deuxième segment comprend un bord inférieur, le coulissement vers le bas du deuxième segment sur le premier segment étant stoppé par une mise en appui dudit bord inférieur contre ladite butée inférieure.

Selon une caractéristique possible de l'invention, le premier segment comprend au moins une paire de deux pions secondaires alignés suivant un axe longitudinal X du véhicule, le deuxième segment comprenant au moins une fente verticale s'étendant dans un plan vertical et longitudinal XZ du véhicule, les deux pions secondaires venant en butée contre deux bords verticaux de la fente pour empêcher tout mouvement du deuxième segment sur le premier segment le long d'un axe longitudinal X du véhicule. Il est en effet fondamental de bien caler les deux segments l'un par rapport à l'autre que ce soit le long d'un axe longitudinal X du véhicule ou un axe transversal Y de celui-ci, afin qu'au fil du temps lesdits deux segments ne se déplacent légèrement et créent de nouveaux jeux.

Selon une caractéristique possible de l'invention, le premier segment est monté sur la planche de bord au moyen d'au moins un clip. Il s'agit d'un moyen rapide et facile à utiliser pour la fixation d'un objet à un autre objet, ne nécessitant ni un outillage particulier ni des efforts trop importants. Avantageusement, le premier segment est fixé à la planche de bord au moyen d'une pluralité de clips.

Selon une caractéristique possible de l'invention, le premier segment s'étend dans un plan sensiblement vertical et longitudinal XZ du véhicule, ledit premier segment comprenant un renflement visible. Ce renflement a pour but d'améliorer l'esthétique du véhicule en donnant l'impression que la planche de bord peut être assimilée à une boite fermée.

Un véhicule selon l'invention, présente l'avantage de posséder des parois latérales d'obturation d'une planche de bord qui sont ajustables, tout en demeurant d'un poids constant par rapport aux véhicules existants, et sans diminuer l'espace disponible dans l'habitacle. Il a de plus l'avantage de permettre un réajustement de la position du deuxième segment par rapport au premier segment au moyen d'une simple manipulation manuelle

On donne ci-après une description détaillée d'un mode de réalisation préféré d'un véhicule selon l'invention, en se référant aux figures suivantes :
[Fig. 1] représente une vue en perspective d'une partie d'un habitacle d'un véhicule selon l'invention montrant une planche de bord, une paroi latérale d'obturation et un côté de caisse,
[Fig. 2] représente une vue en perspective d'une paroi latérale d'obturation d'un véhicule selon l'invention,
[Fig. 3] représente une vue en perspective sous un autre angle de la paroi latérale d'obturation de la figure 2,
[Fig. 4] représente une vue en coupe d'une zone d'interaction entre le premier segment et le deuxième segment, ladite zone comprenant un pion solidarisé au premier segment et un trou oblong pratiqué dans le deuxième segment.

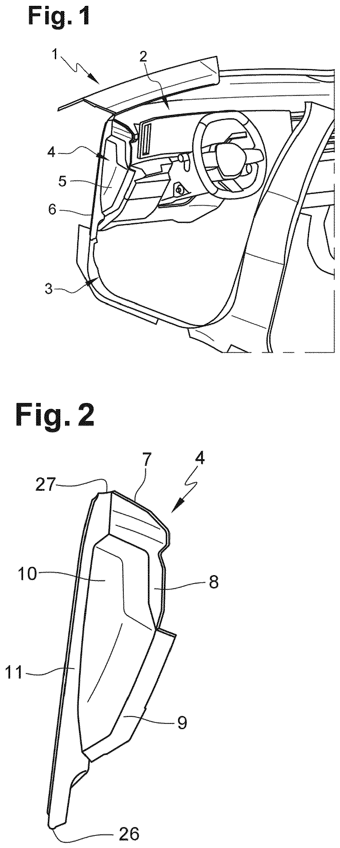

En se référant à la figure 1, un véhicule selon l'invention comprend une planche de bord 2, deux côtés de caisse 3 placés de part et d'autre d'un axe longitudinal X et central du véhicule, et deux parois latérales 4 d'obturation. La planche de bord 2 est placée devant une rangée avant de sièges, comprenant généralement un siège conducteur et un siège passager, et s'étend globalement suivant un axe transversal Y du véhicule 1. Les deux parois latérales d'obturation sont placées aux deux extrémités de la planche de bord 2 considérées suivant un axe longitudinal de celle-ci ou suivant un axe transversal Y du véhicule, et servent à masquer différentes pièces et câblages logés dans ladite planche de bord 2. Ces deux parois latérales 4 d'obturation s'étendent chacune dans un plan sensiblement vertical et longitudinal XZ du véhicule, et chaque paroi latérale 4 d'obturation est directement visible par une personne désirant monter dans le véhicule, soit sur le siège conducteur soit sur le siège passager.

En se référant aux figures 1, 2, et 3, chacune des deux parois latérales 4 d'obturation d'un véhicule 1 selon l'invention, est réalisée en deux segments distincts 5, 6, dont un premier segment 5 est fixé à la planche de bord 2 et dont un deuxième segment 6 est fixé sur un côté de caisse 3. La particularité d'un véhicule 1 selon l'invention est que le deuxième segment 6 est monté coulissant sur le premier segment 5, de manière à affiner sa position au sein dudit véhicule dans le but d'ajuster son calage contre un montant de baie sur le côté de caisse 3. En effet, le coulissement du deuxième segment 6 sur le premier segment 5 permet d'absorber des dispersions de montage du véhicule 1, et donc d'empêcher l'apparition de jeux entre ledit deuxième segment 6 et le montant de baie, qui pourraient s'avérer disgracieux et donner l'impression que le véhicule a été mal fini.

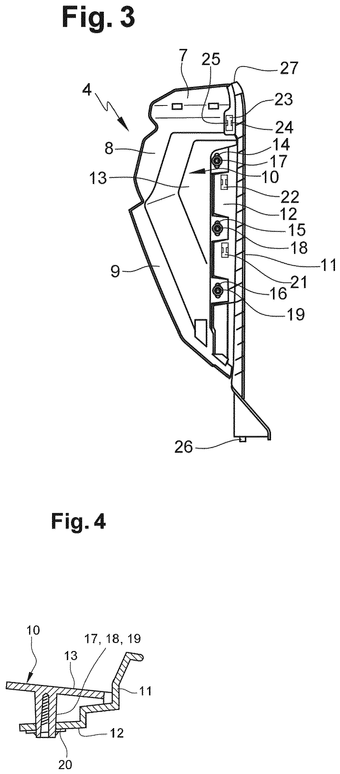

En se référant aux figures 2 et 3, le premier segment 5 se présente sous la forme d'une pièce comportant trois zones coplanaires 7, 8, 9 de faible épaisseur et placées autour d'un renflement 10. Ces trois zones coplanaires 7, 8, 9 sont au contact d'une paroi d'extrémité de la planche de bord 2 s'étendant dans un plan sensiblement vertical et longitudinal XZ du véhicule, lesdites trois zones 7, 8, 9 matérialisant les parties du premier segment 5 par lesquelles celui-ci est fixé à ladite paroi d'extrémité de la planche de bord 2. La fixation du premier segment 5 à la planche de bord 2 s'effectue préférentiellement au moyen de clips, cette fixation empêchant tout mouvement, y compris de très faible amplitude, dudit premier segment 5 relativement à ladite planche de bord 2. Le renflement 10 est creux et est délimité par une paroi de faible épaisseur, conférant au premier segment 5 un aspect bombé.

En se référant à la figure 1, le renflement 10 du premier segment 5 saille vers l'extérieur de la planche de bord 2 suivant un axe transversal Y du véhicule, et est disposé de façon à accroitre la longueur de ladite planche de bord 2.

En se référant aux figures 1, 2 et 3, le deuxième segment 6 comprend schématiquement deux parois 11, 12 sensiblement planes et perpendiculaires, lesdites deux parois 11, 12 étant allongées et s'étendant suivant un axe vertical Z. Parmi ces deux parois 11, 12 :
- une première paroi 11 s'étend dans un plan sensiblement vertical et transversal YZ du véhicule 1, et borde le premier segment 5 à l'avant, et
- une deuxième paroi 12 s'étend dans un plan sensiblement vertical et longitudinal XZ du véhicule et s'insère entre le premier segment 5 et la planche de bord 2 en étant située en vis-à-vis d'une surface interne 13 du renflement 10.

En se référant aux figures 3 et 4, le coulissement du deuxième segment 6 le long du premier segment 5 est assuré par trois trous oblongs 14, 15, 16 creusés dans la deuxième paroi 12 du deuxième segment 6 et par trois pions 17, 18, 19 saillant du premier segment 5 et passant dans lesdits trous oblongs 14, 15, 16. Chaque trou oblong 14, 15, 16 possède un grand axe qui s'étend verticalement, et les trois trous oblongs 14, 15, 16 sont disposés dans la deuxième paroi 12 en étant alignés suivant un axe vertical Z. Autrement dit, les trois trous oblongs 14, 15, 16 sont séparés et sont placés dans la deuxième paroi 12 de sorte que leurs grands axes soient parfaitement alignés.

Chaque pion 17, 18, 19 prend naissance sur la surface interne 13 du renflement 10 et se termine par une tête élargie 20, lesdits trois pions 17, 18, 19 saillant perpendiculairement de ladite surface interne 13 en étant alignés suivant un axe vertical Z. Autrement dit, chaque pion 17, 18, 19 s'étend suivant un axe transversal Y du véhicule.

Comme illustré à la figure 4, chaque pion 17, 18, 19 passe à travers un trou oblong 14, 15, 16 de la deuxième paroi 12 du deuxième segment 6, de sorte que ladite deuxième paroi 12 se retrouve placée entre la surface interne 13 du renflement 10, et la tête élargie 20 dudit pion 17, 18, 19. Plus précisément, cette deuxième paroi 12 du deuxième segment 6 se retrouve en butée contre les têtes élargies 20 des trois pions 17, 18, 19, lesdites têtes élargies 20 empêchant ainsi tout déplacement de la deuxième paroi 12 du deuxième segment 6 suivant un axe transversal Y du véhicule.

Le réajustement de la position du deuxième segment 6 dans le véhicule 1, s'effectue manuellement au moyen d'un coulissement vertical de chaque trou oblong 14, 15, 16 autour d'un pion 17, 18, 19. La longueur du grand axe des trous oblongs 14, 15, 16 définit l'amplitude de coulissement maximale du deuxième élément 6 le long du premier élément 5. Préférentiellement la longueur dudit grand axe, est inférieure à 5cm, et de façon encore plus avantageuse, cette longueur est inférieure à 3cm. Grâce à la mobilité du deuxième segment 6 sur le premier segment 5, il suffit de déplacer ledit deuxième segment 6 sur une très faible amplitude, pour venir le caler contre un montant de baie et assurer une continuité visuelle du véhicule au niveau de ce calage.

En se référant à la figure 3, la deuxième paroi 12 du deuxième segment 6 comprend en outre trois fentes 21, 22, 23 fermées et allongées s'étendant parallèlement aux trois trous oblongs 14, 15, 16. Autrement dit, chaque fente 21, 22, 23 possède un axe longitudinal qui s'étend verticalement, et les trois fentes sont disposées dans la deuxième paroi 12 en étant alignés suivant un axe vertical Z. Pour résumer, les trois fentes 21, 22, 23 sont séparées et sont placées dans la deuxième paroi 12 de sorte que leurs axes longitudinaux centraux soient alignés suivant un même axe vertical. La surface interne 13 du renflement 10 du premier segment 5 comprend deux paires de deux pions secondaires 24, 25, de sorte que les deux pions secondaires d'une même paire sont alignés suivant un axe longitudinal X du véhicule 1. Les deux pions secondaires 24, 25 d'une même paire viennent se caler contre les deux bords verticaux délimitant une même fente 21, 22, 23 et permettent d'empêcher tout mouvement du deuxième segment 6 par rapport au premier segment 5 suivant un axe longitudinal X du véhicule 1.

En se référant à la figure 3, le coulissement vers le bas du deuxième segment 6 sur le premier segment 5 est stoppé par une mise en appui d'un bord inférieur dudit deuxième segment 6, contre une butée inférieure 26 dudit premier segment 5 fixé à la planche de bord 2.

En se référant aux figures 2 et 3, le deuxième segment 6 est monté coulissant sur le côté de caisse 3 au moyen d'au moins deux clips 27, 28 placés aux deux extrémités du deuxième segments 6 considérées le long d'un axe vertical Z.

## Revendications

1. Véhicule (1) comprenant deux côtés de caisse (3), une planche de bord (2) s'étendant suivant un axe transversal Y du véhicule et deux parois latérales (4) d'obturation placées aux deux extrémités de ladite planche de bord (2) considérées suivant un axe longitudinal de celle-ci, chacune des deux parois latérales (4) d'obturation comprenant un premier segment (5) fixé à la planche de bord (2) et un deuxième segment (6) fixé sur un côté de caisse (3), **caractérisé en ce que** le deuxième segment (6) est fixé de façon mobile sur le côté de la caisse (3) et **en ce que** le deuxième segment (6) est monté coulissant sur le premier segment (5) de façon à ajuster le calage dudit deuxième segment (6) avec un montant de baie sur le côté de caisse (3).

2. Véhicule selon la revendication 1, **caractérisé en ce que** le deuxième segment (6) est monté coulissant sur le premier segment (5) le long d'un axe vertical Z.

3. Véhicule selon la revendication 2, **caractérisé en ce que** l'un des deux éléments constitués par le premier segment (5) et le deuxième segment (6) comprend au moins un trou oblong (14, 15, 16) dont le grand axe s'étend suivant un axe vertical, et **en ce que** l'autre élément (5, 6) comprend au moins un pion (17, 18, 19) fixe passant dans ledit trou oblong (14, 15, 16).

4. Véhicule selon la revendication 3, **caractérisé en ce que** le deuxième segment (6) comprend ledit au moins un trou oblong (14, 15, 16) et le premier segment (5) comprend ledit au moins un pion (17, 18, 19), et **en ce que** le pion (14, 15, 16) prend naissance sur le premier segment (5) et se termine par une tête élargie (20), ledit pion (14, 15, 16) passant dans le trou oblong (14, 15, 16) de sorte que la tête élargie (20) empêche le deuxième segment (6) de s'écarter du premier segment (5) et donc de se déplacer le long d'un axe transversal Y du véhicule (1).

5. Véhicule selon la revendication 4, **caractérisé en ce que** le deuxième segment (6) comprend trois trous oblongs (14, 15, 16) dont les grands axes s'étendent suivant un axe vertical et le premier segment (5) comprend trois pions (17, 18, 19) passant chacun dans un trou oblong (14, 15, 16), et **en ce que** les trois trous oblongs (14, 15, 16) sont séparés et alignés le long d'un axe vertical.

6. Véhicule selon l'une quelconque des revendications 4 ou 5, **caractérisé en ce que** l'amplitude maximale de déplacement du deuxième segment (6) sur le premier segment (5) est inférieure à 5cm.

7. Véhicule selon l'une quelconque des revendications 5 ou 6, **caractérisé en ce que** le premier segment (5) comprend une butée inférieure (26) et **en ce que** le deuxième segment (6) comprend un bord inférieur, le coulissement vers le bas du deuxième segment (6) sur le premier segment (5) étant stoppé par une mise en appui dudit bord inférieur contre ladite butée inférieure (26).

8. Véhicule selon l'une quelconque des revendications 4 à 7, **caractérisé en ce que** le premier segment (5) comprend au moins une paire de deux pions secondaires (27, 28) alignés suivant un axe longitudinal X du véhicule, et **en ce que** le deuxième segment (6) comprend au moins une fente verticale (21, 22, 23) s'étendant dans un plan vertical et longitudinal XZ du véhicule, les deux pions secondaires (27, 28) venant en butée contre deux bords verticaux de la fente (21, 22, 23) pour empêcher tout mouvement du deuxième segment (6) sur le premier segment (5) le long d'un axe longitudinal X du véhicule.

9. Véhicule selon l'une quelconque des revendications 1 à 8, **caractérisé en ce que** le premier segment (5) est monté sur la planche de bord (2) au moyen d'au moins un clip.

10. Véhicule selon l'une quelconque des revendications 1 à 9, **caractérisé en ce que** le premier segment (5) s'étend dans un plan sensiblement vertical et longitudinal XZ du véhicule, et **en ce que** ledit premier segment (5) comprend un renflement (10) visible.

## Patentansprüche

1. Fahrzeug (1), umfassend zwei Kastenseiten (3), ein Armaturenbrett (2), das sich entlang einer Querachse Y des Fahrzeugs erstreckt, und zwei seitliche Verschlusswände (4), die an den beiden Enden des Armaturenbretts (2), entlang einer Längsachse desselben betrachtet, angeordnet sind, wobei jede der beiden seitlichen Verschlusswände (4) ein am Armaturenbrett (2) befestigtes erstes Segment (5) und ein an einer Kastenseite (3) befestigtes zweites Segment (6) umfasst, **dadurch gekennzeichnet, dass** das zweite Segment (6) beweglich an der Kastenseite (3) befestigt ist und dass das zweite Segment (6) gleitend am ersten Segment (5) befestigt ist, um die Verkeilung des zweiten Segments (6) mit einem Säulenprofil auf der Kastenseite (3) einzustellen.

2. Fahrzeug nach Anspruch 1, **dadurch gekennzeichnet, dass** das zweite Segment (6) entlang einer vertikalen Achse Z gleitend am ersten Segment (5) befestigt ist.

3. Fahrzeug nach Anspruch 2, **dadurch gekennzeichnet, dass** eines der beiden Elemente, die durch das erste Segment (5) und das zweite Segment (6) ausgebildet sind, mindestens ein Langloch (14, 15, 16) umfasst, dessen Hauptachse sich entlang einer vertikalen Achse erstreckt, und dass das andere Element (5, 6) mindestens einen festen Zapfen (17, 18, 19) umfasst, der im Langloch (14, 15, 16) verläuft.

4. Fahrzeug nach Anspruch 3, **dadurch gekennzeichnet, dass** das zweite Segment (6) das mindestens eine Langloch (14, 15, 16) umfasst und das erste Segment (5) den mindestens einen Zapfen (17, 18, 19) umfasst und dass der Zapfen (14, 15, 16) am ersten Segment (5) entsteht und in einem verbreiterten Kopf (20) endet, wobei der Zapfen (14, 15, 16) so im Langloch (14, 15, 16) verläuft, dass der verbreiterte Kopf (20) das zweite Segment (6) daran hindert, sich vom ersten Segment (5) zu entfernen und sich somit entlang einer Querachse Y des Fahrzeugs (1) zu bewegen.

5. Fahrzeug nach Anspruch 4, **dadurch gekennzeichnet, dass** das zweite Segment (6) drei Langlöcher (14, 15, 16) umfasst, deren Hauptachsen sich entlang einer vertikalen Achse erstrecken, und dass das erste Segment (5) drei Zapfen (17, 18, 19) umfasst, die jeweils in einem Langloch (14, 16) verlaufen, und dass die drei Langlöcher (14, 15, 16) getrennt und entlang einer vertikalen Achse ausgerichtet sind.

6. Fahrzeug nach einem der Ansprüche 4 oder 5, **dadurch gekennzeichnet, dass** die maximale Bewegungsamplitude des zweiten Segments (6) am ersten Segment (5) weniger als 5 cm beträgt.

7. Fahrzeug nach einem der Ansprüche 5 oder 6, **dadurch gekennzeichnet, dass** das erste Segment (5) einen unteren Anschlag (26) umfasst und dass das zweite Segment (6) eine untere Kante umfasst, wobei das Abwärtsgleiten des zweiten Segments (6) am ersten Segment (5) durch eine Anlage der unteren Kante am unteren Anschlag (26) gestoppt wird.

8. Fahrzeug nach einem der Ansprüche 4 bis 7, **dadurch gekennzeichnet, dass** das erste Segment (5) mindestens ein Paar zweier sekundärer Zapfen (27, 28) umfasst, die entlang einer Längsachse X des Fahrzeugs ausgerichtet sind, und dass das zweite Segment (6) mindestens einen vertikalen Schlitz (21, 22, 23) umfasst, der sich in einer vertikalen und longitudinalen Ebene XZ des Fahrzeugs erstreckt, wobei die beiden sekundären Zapfen (27, 28) an zwei vertikalen Kanten des Schlitzes (21, 22, 23) zur Anlage kommen, um jede Bewegung des zweiten Segments (6) am ersten Segment (5) entlang einer Längsachse X des Fahrzeugs zu verhindern.

9. Fahrzeug nach einem der Ansprüche 1 bis 8, **dadurch gekennzeichnet, dass** das erste Segment (5) mit Hilfe mindestens eines Clips am Armaturenbrett (2) montiert ist.

10. Fahrzeug nach einem der Ansprüche 1 bis 9, **dadurch gekennzeichnet, dass** sich das erste Segment (5) in einer im Wesentlichen vertikalen und longitudinalen Ebene XZ des Fahrzeugs erstreckt und dass das erste Segment (5) eine sichtbare Ausbuchtung (10) umfasst.

## Claims

1. Vehicle (1) comprising two bodyshell sides (3), a dashboard (2) extending along a transverse axis Y of the vehicle and two lateral closing-off walls (4) placed at the two ends of said dashboard (2) considered along a longitudinal axis thereof, each of the two lateral closing-off walls (4) comprising a first segment (5) fastened to the dashboard (2) and a second segment (6) fastened on a bodyshell side (3), **characterized in that** the second segment (6) is fastened so as to be able to move on the bodyshell side (3) and **in that** the second segment (6) is mounted so as to slide on the first segment (5) in such a way as to adjust the wedging of said second segment (6) with a window pillar on the bodyshell side (3) .

2. Vehicle according to Claim 1, **characterized in that** the second segment (6) is mounted so as to slide on the first segment (5) along a vertical axis Z.

3. Vehicle according to Claim 2, **characterized in that** one of the two elements constituted by the first segment (5) and the second segment (6) comprises at least one oblong hole (14, 15, 16) of which the major axis extends along a vertical axis, and **in that** the other element (5, 6) comprises at least one fixed peg (17, 18, 19) passing through said oblong hole (14, 15, 16).

4. Vehicle according to Claim 3, **characterized in that** the second segment (6) comprises said at least one oblong hole (14, 15, 16) and the first segment (5) comprises said at least one peg (17, 18, 19), and **in that** the peg (14, 15, 16) originates on the first segment (5) and ends in an enlarged head (20), said peg (14, 15, 16) passing through the oblong hole (14, 15, 16) such that the enlarged head (20) prevents the second segment (6) from moving away from the first segment (5) and therefore from moving along a transverse axis Y of the vehicle (1).

5. Vehicle according to Claim 4, **characterized in that** the second segment (6) comprises three oblong holes (14, 15, 16) of which the major axes extend along a vertical axis and the first segment (5) comprises three pegs (17, 18, 19) each passing through an oblong hole (14, 16), and **in that** the three oblong holes (14, 15, 16) are separated and aligned along a vertical axis.

6. Vehicle according to either one of Claims 4 and 5, **characterized in that** the maximum amplitude of movement of the second segment (6) on the first segment (5) is less than 5 cm.

7. Vehicle according to either one of Claims 5 and 6, **characterized in that** the first segment (5) comprises a lower stop (26) and **in that** the second segment (6) comprises a lower edge, the downward sliding of the second segment (6) on the first segment (5) being stopped by said lower edge bearing against said lower stop (26).

8. Vehicle according to any one of Claims 4 to 7, **characterized in that** the first segment (5) comprises at least one pair of two secondary pegs (27, 28) aligned along a longitudinal axis X of the vehicle, and **in that** the second segment (6) comprises at least one vertical slot (21, 22, 23) extending in a vertical and longitudinal plane XZ of the vehicle, the two secondary pegs (27, 28) coming into abutment against two vertical edges of the slot (21, 22, 23) so as to prevent any movement of the second segment (6) on the first segment (5) along a longitudinal axis X of the vehicle.

9. Vehicle according to any one of Claims 1 to 8, **characterized in that** the first segment (5) is mounted on the dashboard (2) by means of at least one clip.

10. Vehicle according to any one of Claims 1 to 9, **characterized in that** the first segment (5) extends in a substantially vertical and longitudinal plane XZ of the vehicle, and **in that** said first segment (5) comprises a visible bulge (10).
